# EUROPEAN PATENT APPLICATION

(11) **EP 4 542 948 A1**
(43) Date of publication of application: **23.04.2025**
(21) Application number: 24206362.6
(22) Date of filing: 14.10.2024
(51) Int. Cl.: H04L 41/0604, H04L 41/0631, H04L 41/069, H04L 41/0654, H04L 41/5074

(54) **MAINTENANCE TRACKING IN ALARMS**

(30) Priority: 20.10.2023 US 202318491730
(71) Applicant: T-Mobile Innovations LLC, Bellevue, WA 98006 (US)
(72) Inventor: GONZALEZ, Jose A., Maitland, 32751 (US); LUSHEAR, Brian D., Winter Springs, 32708 (US)
(74) Representative: Suddaby, Mark Edward

(57) **Abstract**

A method comprises maintaining a maintenance identifier identifying the maintenance event and an identity of a maintenance technician responsible for performing the maintenance event, obtaining the alarm created during a maintenance interval associated with the maintenance event, wherein the maintenance interval is a preset period of time during which the maintenance event is to be performed at a cell site, and in response to the alarm still being active after the maintenance interval has expired adding the maintenance identifier to the alarm, generating, by the incident reporting application, and transmitting a notification associated with incident report directly to the maintenance technician via the method of communicating with the maintenance device.

## Description

### CROSS-REFERENCE TO RELATED APPLICATIONS

None.

### STATEMENT REGARDING FEDERALLY SPONSORED RESEARCH OR DEVELOPMENT

Not applicable.

### REFERENCE TO A MICROFICHE APPENDIX

Not applicable.

### BACKGROUND

Communication network operators build systems and tools to monitor their networks, to identify network elements (NEs) that need maintenance, to assign maintenance tasks to personnel, and to fix network elements. Operational support systems (OSSs) may be provided by vendors of NEs to monitor and maintain their products. When trouble occurs in NEs, the OSS and/or the NEs may generate an alarm notification. An incident reporting system may be provided by the network operator to track incident reports which may be assigned to employees to resolve one or more pending alarms. A network operation center (NOC) may provide a variety of workstations and tools for NOC personnel to monitor alarms, close incident reports, and maintain the network as a whole. It is understood that operating and maintaining a nationwide communication network comprising tens of thousands of cell sites and other NEs is very complicated.

### SUMMARY

In an embodiment, a method for resolving an alarm triggered at a time of a maintenance event in a communication system is disclosed. The method comprises maintaining, in a data store of the communication system, a maintenance identifier identifying the maintenance event and an identity of a maintenance technician responsible for performing the maintenance event, in which identity of the maintenance technician comprises a method of communicating with a maintenance device of the maintenance technician. The method further comprises obtaining, by an incident management application executing on a computer system in the communication system, the alarm created during a maintenance interval associated with the maintenance event, wherein the maintenance interval is a preset period of time during which the maintenance event is to be performed at a cell site. In response to the alarm still being active after the maintenance interval has expired, the method further comprises adding, by an incident reporting application executing on the computer system in the communication system, the maintenance identifier to the alarm, generating, by the incident reporting application, an incident report based on the alarm, and transmitting, by the incident reporting application, a notification associated with incident report directly to the maintenance technician via the method of communicating with the maintenance device.

In another embodiment, a communication system comprising a radio access network is disclosed. The communication system comprises an incident management application and an incident reporting application. The incident management application executes on a first computer system and is configured to obtain an alarm created during a maintenance interval associated with a maintenance event, wherein the maintenance interval is a preset period of time during which the maintenance event is to be performed at a cell site, indicate, in the alarm, that incident report creation is to be suppressed for this alarm during the maintenance interval, and determine that the alarm is still active after the maintenance interval has expired. The incident reporting application executes on a second computer system and is configured to add a maintenance identifier to the alarm, wherein the maintenance identifier identifies the maintenance event, generate an incident report based on the alarm, transmit a notification associated with incident report directly to a maintenance device associated with a maintenance technician responsible for performing the maintenance event, wherein the notification requests the maintenance technician to indicate whether to extend the maintenance interval, receive an indication from the maintenance device to extend the maintenance interval, and close the incident report when the maintenance interval has been extended.

In yet another embodiment, a method for resolving an alarm triggered at a time of a maintenance event in a communication system is disclosed. The method comprises obtaining, by an incident management application executing on a computer system in the communication system, the alarm created during a maintenance interval associated with the maintenance event, in which the maintenance interval is a preset period of time during which the maintenance event is to be performed at a cell site. The method further comprises determining, by the incident management application, that the alarm is still active after the maintenance interval has expired, and in response to the alarm still being active after the maintenance interval has expired, adding, by an incident reporting application executing on the computer system in the communication system, a maintenance identifier identifying the maintenance event to the alarm, generating, by the incident reporting application, an incident report based on the alarm, and transmitting, by the incident reporting application, a notification associated with the incident report directly to a maintenance device associated with a maintenance technician responsible for performing the maintenance event.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is a block diagram of a system according to an embodiment of the disclosure.
FIG. 2A-2D are illustrations of maintenance events causing an alarm in the system of FIG. 1 according to an embodiment of the disclosure.
FIG. 3 is a flow chart of a method according to an embodiment of the disclosure.
FIG. 4 is a flow chart of another method according to an embodiment of the disclosure.
FIG. 5A and FIG. 5B are block diagrams of a 5G network according to an embodiment of the disclosure.
FIG. 6 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

A communications system may include one or more radio access networks (RANs), each including network elements (NEs) used to transport traffic between a source and destination. The NEs may include, for example, routers, virtual private networks (VPNs), cell sites, etc. The communication system may also include an alarm and incident reporting system, which may include, for example, one or more OSSs, central monitoring station(s), incident reporting applications, and/or incident management applications, that work together to monitor and resolve hardware and software incidents that may occur at the NEs in the system. For example, each of the NEs in the region may be subject to a variety of faults or failures (i.e. incidents), which result in the triggering of alarms that are picked up by OSSs. The alarms may be propagated upwards to an incident reporting application or a central monitoring station, which may be responsible for automatically or manually generating an incident report detailing an outage caused by the alarm.

The proper functioning and operability of the NEs in the communication system may be maintained by completing maintenance activities (or "maintenance events," as referred to herein) on the hardware and software components of cell sites and other NEs. A maintenance event may refer to the performing of one or more activities to ensure that an NE operates effectively and efficiently. The maintenance activities may include, for example, functional checks, servicing, repairing or replacing the necessary equipment and building infrastructure at the NE. Regular maintenance may ensure that each component at the cell site operates efficiently during its intended life span. A maintenance event may be performed by a maintenance technician, such as, for example, an experienced personnel or electrician that may be trained to help keep the structures safe, operational, and compliant.

For example, a maintenance technician may be responsible for performing a maintenance event at a particular cell site, and may determine that the maintenance tasks may be performed within a certain period of time, which may be referred to herein as a maintenance interval. The maintenance technician may enter this maintenance interval into a maintenance device owned and operated by the maintenance technician via, for example, an application installed at the maintenance device. The application may provide a user interface by which the maintenance technician may provide maintenance data regarding the maintenance event (e.g., select or enter the period of time of the maintenance interval). For example, the maintenance data may include a time of initiating maintenance, whether the maintenance event is service impacting or not, technologies affected by the maintenance event, the NE and the component(s) of the NE upon which maintenance is performed, steps performed during maintenance, etc. The application at the maintenance device may transmit the maintenance interval and other maintenance data to a data store in the communication system. The data store may store maintenance records that are each associated with a maintenance event. Each maintenance record may store the maintenance interval and the other maintenance data related to the maintenance event. The data store may store, with the maintenance record or separate from the maintenance record, identification data regarding the maintenance technician responsible for performing the maintenance event.

Unfortunately, more than 30% of incidents presented to a central monitoring station may be caused by a planned maintenance event that did not contain or resolve the alarm conditions generated while the maintenance event was performed. When a maintenance event is performed across some components at an NE, these components may be switched off or altered in some fashion, that may or may not be service impacting (i.e., affecting whether the component may operate as normal or not). This change of state of the components during a maintenance event may cause an incident (e.g., fault or failure) to occur at the NE, which may trigger the generation of one or more alarms that the NE may be configured to generate in response to detection of the incident. In other words, during a maintenance event, a NE may intentionally be set in a manner for maintenance purposes that has the side effect of causing an alarm to be generated. For this reason, the incident reporting application may be suppressed or prohibited from generating incident reports based on alarms received for the NE or related NEs while a maintenance event is being performed (i.e., during a maintenance interval).

A related NE may not necessarily be part of the NE upon which the maintenance event is performed, but may be affected by the maintenance event being performed on the NE. For example, the system may maintain a mapping of all related NEs that may be affected when a maintenance event is performed on one or more of the related NEs, such that alarms for all of the related NEs may be suppressed when a maintenance event is being performed on one or more of the related NEs. The mappings may be stored in a data store coupled to and accessible by an incident reporting application. In some cases, when the maintenance window ends and/or when the maintenance event is complete, alarms for all of the related NEs may be reinstated. In this way, multiple alarms across one or more related NEs may be suppressed when a maintenance event is being performed at an NE and then correspondingly reinstated when at least one of the maintenance interval for the maintenance event is complete or the maintenance event is indicated as complete by the maintenance technician.

However, these alarms that are triggered during a maintenance interval are sometimes not cleared after the maintenance interval expires or after the maintenance technician completes maintenance at the cell site. This may be because of maintenance technician error (i.e., he or she resolved the incident that caused the alarm, but forgot to clear the alarm) or because the incident is still occurring at the cell site (i.e., the maintenance technician did not actually resolve the alarm or condition that caused the incident).

When the maintenance interval expires, the incident report generation suppression may be disabled. Therefore, when an alarm is still active after incident report generation suppression has been disabled, the incident reporting application may now be triggered to generate an incident report for the alarm. An incident management application or a personnel at the NOC may manually determine, from the alarm, that the alarm indeed originated during a maintenance interval of the cell site. The NOC personnel may manually update a cause of the incident report to be the maintenance event and then look up the maintenance history of the cell site to determine the maintenance technician who performed the maintenance event at the cell site. The NOC personnel at this stage may need to manually contact the maintenance technician to determine why the alarm was not cleared or request the maintenance technician to resolve the incident that caused the alarm to be triggered during the maintenance event.

For example, this may involve the maintenance technician driving a service truck back to the location of the NE after having left the NE site and driven away. In this way, the system may notify the maintenance technician regarding incomplete tasks or possible issues he or she caused during the maintenance event. The maintenance technician may receive this notification before the maintenance technician actually leaves or is too far from the cell site. For example, the maintenance technician may receive the notification before getting into the maintenance vehicle to drive away, or shortly after driving away but before being too far away from the cell site, etc. Therefore, sending the notification to the maintenance technician in the manner disclosed herein may save maintenance technician driving time and associated expenses. This may also be beneficial to the environment because, by reducing transportation time and costs, the consumption of fossil fuels and the emission of greenhouse gases has also been reduced.

Therefore, when a maintenance interval expires and an alarm is still indicated as being active (e.g., has not been cleared), the resolution of this alarm may involve the performance of several inefficient and redundant steps, performed by various entities in the system and/or NOC personnel. These steps may also involve the redundant monitoring and the sending of large amounts of data back and forth to identify the root cause of the incident, resolve the incident, and avoid similar incidents going forward, thereby wasting valuable networking and processing resources.

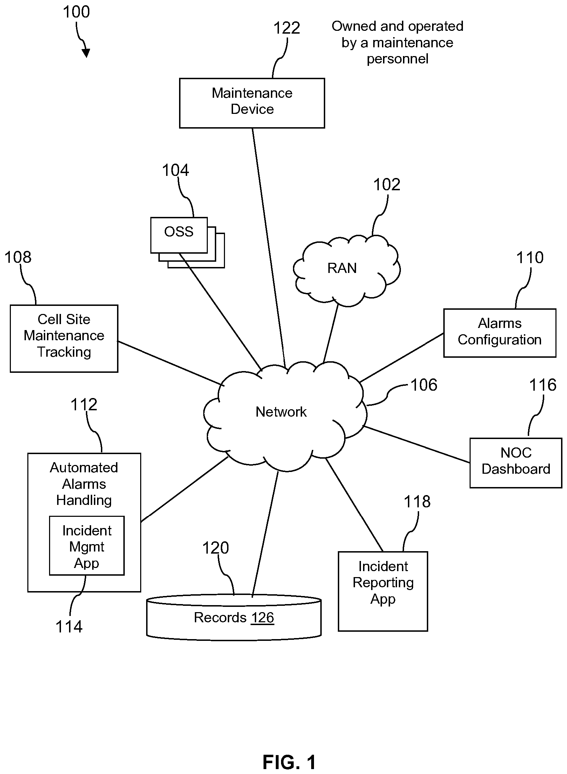

The present disclosure teaches a technical solution to the foregoing technical problem related to network operations and maintenance by efficiently resolving an alarm triggered at a time of a maintenance event in the communication system. As mentioned above, the communication system may include one or more RANs, with cell sites and other NEs. The communication system may also include the alarm and incident reporting system disclosed herein, which is further described below with reference to FIG. 1.

A data store in the communication system may store maintenance data associated with the maintenance events performed throughout the system. In an embodiment, the maintenance data may include a maintenance identifier identifying the maintenance event. The maintenance identifier may be, for example, a change record or an incident record. For example, the maintenance identifier may be an alphanumeric identifier. In some cases, a scheduled maintenance identifier may begin with different characters than an incident identifier, such that a maintenance identifier identifying a maintenance event may be easily distinguished from an incident identifier identifying break/fix work. The maintenance data may also store data describing a maintenance event, data describing the tasks performed during maintenance, and/or an identification of the maintenance technician responsible for performing the maintenance event. For example, the maintenance data may include the period of time of the maintenance interval, a time of initiating maintenance (e.g., the beginning of the maintenance interval), whether the maintenance event is service impacting or not, technologies affected by the maintenance event, the NE and the component(s) of the NE upon which maintenance is performed, steps performed during maintenance, etc.

As mentioned, an alarm may be triggered during a maintenance interval due to the change in the state of various components at a cell site while the maintenance event is being performed. During the maintenance interval, the generation of an incident report for these alarms may be suppressed. However, when the alarm is still active after the maintenance interval expires, the incident reporting application may be triggered to generate an incident report for this alarm. In an embodiment, the incident management application may poll the alarms received by the system to determine which alarms were previously suppressed due to a maintenance event, but now no longer suppressed due to the expiration of the maintenance interval. When the incident management application obtains such an alarm, the incident management application may determine that the incident that triggered this alarm is somehow related to (e.g., caused by) the maintenance event. For example, the maintenance technician may have inadvertently forgotten to clear the alarm, the maintenance event itself may have given rise to an incident at one or more other components or technologies at the cell site, an incident may simply have not been resolved during maintenance, etc.

In an embodiment, the incident reporting application may generate an incident report based on this alarm. For example, the alarm and/or the generated incident report may indicate a status of the maintenance event at the time the alarm was created (e.g., in maintenance or completed maintenance) and a service impacting status of the maintenance event (e.g., whether the maintenance event is service impacting). These statuses may be obtained from the data store and, in particular, from a record associated with the maintenance event stored at the data store.

In an embodiment, the incident reporting application may indicate, in the alarm, that the cause of the incident is related to the maintenance event. The incident reporting application may obtain the maintenance identifier for this maintenance event from the data store. The incident reporting application may then add this maintenance identifier to the incident report.

The incident reporting application may also obtain identification data regarding the maintenance technician for the maintenance event. The identification data regarding the maintenance technician may be obtained from the record associated with the maintenance event, or may be stored in another data store or database in association with the maintenance identifier. The identification data may include, for example, a name of the maintenance technician and a method of communicating with the maintenance device of the maintenance technician (e.g., phone number or email address).

The incident reporting application may then bypass the NOC altogether and all the inefficiencies that may be involved in sending the incident report to the NOC, and instead transmit a notification associated with the incident report directly to the maintenance technician. In an embodiment, the notification may include the incident report itself and a request for confirmation from the maintenance technician that the maintenance technician accepts the incident report (i.e., accepts responsibility of resolving the incident at the cell site that triggered the alarm during the maintenance interval and has not yet been cleared). In other embodiments, the notification may include other data or requests based on a status of the incident causing the alarm, a status of the maintenance event, a status of the components or technologies involved in the maintenance event, etc.

For example, in some cases, the maintenance interval may be underestimated by the maintenance technician such that maintenance is still being performed after the maintenance interval is expired. In this case, the state of the components of the cell site may still be disabled or altered, resulting in alarms that may no longer be suppressed from triggering the creation of an associated incident report. In this case, the incident management application may determine that this alarm is caused by a maintenance event, although outside the maintenance interval. The incident management application may wait a pre-determined period of time (e.g., a few minutes) before accessing the data store to obtain a maintenance history associated with the maintenance event. When the maintenance history indicates that the maintenance interval was re-started (e.g., sometime during the pre-determined wait period, by the maintenance technician), the incident management application may ignore the alarm and continue suppression of incident report generation. In another embodiment, the incident reporting application may proceed with generating an incident report including, for example, the maintenance identifier identifying the maintenance event and an indication that the incident is caused by the maintenance event.

In this embodiment, the incident management application may also send a notification to the maintenance device after the incident report is generated but prior to determining whether the maintenance interval was re-started. The notification may be an instruction for the application at the maintenance device to display a prompt at the maintenance device. The prompt may request the maintenance technician to confirm whether or not to extend the maintenance interval in view of the recently received alarm outside the prior maintenance interval. The maintenance technician may respond to the prompt via a user interface of the maintenance device, and the maintenance device may transmit the response to the prompt (i.e., the instruction to extend the maintenance interval or not) to the incident reporting application and the data store to update the maintenance history and maintenance interval in the record. The incident reporting application may then access the data store to determine whether the maintenance interval has been extended and whether the maintenance technician should be notified of the alarm. When the maintenance history indicates that the maintenance interval was extended, the incident reporting application may close the incident report (e.g., discard or drop the incident report).

As another example, the maintenance event may be a non-service impacting maintenance event (i.e., the maintenance event may not change the status of the components at the cell site in a manner that would change the on-air functionality of the components at the cell site). In this case, the record associated with the maintenance event may indicate the non-service impacting nature of the maintenance event, which also means that alarms triggered at the cell site during the maintenance interval may not be suppressed. Therefore, when an alarm is triggered at a cell site for which a non-service impacting maintenance event is being performed, the incident reporting application may still generate an incident report including the maintenance identifier. Instead of sending the incident report to the NOC, a notification associated with the incident report may instead be sent to the maintenance device to notify the maintenance technician that an alarm has been detected at the cell site in which maintenance is being performed. The notification may present details regarding the alarm and provide an opportunity for the maintenance technician to revise the maintenance data for the maintenance event. For example, the notification may include an instruction for the application at the maintenance device to present a user interface through which the maintenance technician may change the status of the maintenance event to be a service impacting maintenance event. The user interface may also be provided, for example, to view other details regarding the incident giving rise to the alarm.

As yet another example, the maintenance event may be indicated, in the maintenance record and thus by the maintenance technician, as being performed on a component of the cell site (e.g., radio head) and on only one technology associated with this component (e.g., 5^{th} generation (5G)). Therefore, only alarms from the radio head dealing with 5G communications may be suppressed from incident report generation. However, alarms related to other technologies (e.g. LTE) with the same radio head component may be triggered, indicating that the maintenance technician entered the incorrect technologies for the maintenance event (i.e., both 5G and LTE communications may be affected by the maintenance event at the radio head, and thus both 5G and LTE related alarms may need to be suppressed). Again, instead of sending the incident report to the NOC, a notification associated with the incident report may instead be sent to the maintenance device to notify the maintenance technician that an alarm has been detected at the cell site in which maintenance is being performed. The notification may present details regarding the alarm related to the LTE communication and provide an opportunity for the maintenance technician to revise the maintenance data for the maintenance event. For example, the notification may instruct the application at the maintenance device to present a user interface through which the maintenance technician may indicate that the maintenance event impacts both 5G and LTE technologies. The user interface may also be provided, for example, to view other details regarding the incident giving rise to the alarm.

In some cases, maintenance intervals at a particular cell site may overlap. For example, a long maintenance interval may be set at the cell site to resolve a relatively greater issue involving a longer period of work on a cell site (often non-service impacting events). Meanwhile, shorter maintenance intervals may simultaneously be set during the long maintenance interval to resolve smaller issues at the cell site (often service impacting events). The long maintenance interval and the shorter maintenance intervals may each be associated with different maintenance identifiers. The system may select a maintenance identifier from whichever maintenance interval was scheduled closest to the actual incident that gave rise to the alarm during the maintenance interval. The system may then notify the maintenance technician associated with the maintenance event corresponding to the selected maintenance identifier, as described above.

In some cases, the system may be configured to perform initial fixes to automatically address an alarm before an incident report is created for an alarm. In this case, an NE may be configured to perform certain initial steps automatically to resolve faults or failures that give rise to common alarms, such that the system may not need to go through the process of incident report generation and NOC notification for common alarms with relatively simply solutions. For example, the initial steps may be a targeted reboot or reset of the NE, which may easily correct the fault that gave rise to the common alarm. In the context of a maintenance event, when an alarm is suppressed, this performing of initial fixes may also be suppressed during a maintenance interval of a maintenance event. However, when the maintenance interval terminates, the alarm may be reinstated as described above, and the NE may then also perform the initial fixes if the suppressed alarm is a common alarm. For example, each alarm may be identified by an alarm identifier, and the NE may maintain alarm identifiers, in a data store, for common alarms for which the NE may be preconfigured to perform the initial fix. When the initial fixes do not correct the failure that gave rise to the alarm, the alarm may be escalated to the creation of the special incident report, as described herein. In this manner, noise is reduced, automatic fix efforts are reduced unnecessarily, such that automatic fix efforts are only performed after a maintenance interval has terminated.

In this way, the embodiments disclosed herein prevent future outages in the network by strategically and automatically identifying when a maintenance event triggered an incident, and using data that previously may not have been stored or otherwise leveraged to more efficiently resolve the incident. The embodiments limit the amount of unnecessary data processing and transmission typically required in resolving these types of incidents that arise due to maintenance events, which often results in tedious and redundant processing tasks. Therefore, the embodiments disclosed herein increase network capacity and customer experience by decreasing future outages of the system. The embodiments disclosed herein also increase the efficiency by which incidents that cause alarms during maintenance events are resolved, and decrease the consumption of network, power, and computing resources in the process of resolving the incidents.

Turning now to FIG. 1, a communication system 100 is described. In an embodiment, the communication system 100 comprises a radio access network (RAN) 102, a plurality of operational support systems (OSSs) 104, a network 106, a cell site maintenance tracking system 108, an alarms configuration system 110, an automated alarms handling system 112 that executes an incident management application 114, a network operation center (NOC) dashboard system 116, an incident reporting system (or application) 118, a data store 120, and a maintenance device 122. It should be appreciated that the communication system 100 may include other devices, applications, servers, and/or data stores not explicitly shown in FIG. 1. In an embodiment, communication system 100 may be a telecommunications carrier network comprising the RAN 102.

The RAN 102 comprises a plurality of cell sites and backhaul equipment. In an embodiment, the RAN 102 comprises tens of thousands or even hundreds of thousands of cell sites. The cell sites may comprise electronic equipment and radio equipment including antennas. The cell sites may be associated with towers or buildings on which the antennas may be mounted. The cell sites may comprise a cell site router that couples to a backhaul link from the cell sites to the network 106. The cell sites may provide wireless links to user equipment (e.g., mobile phones, smart phones, personal digital assistants, laptop computers, tablet computers, notebook computers, wearable computers, headset computers) according to a 5G, a long-term evolution (LTE), code division multiple access (CDMA), or a global system for mobile communications (GSM) telecommunication protocol. In an embodiment, the OSSs 104 comprise tens or even hundreds of OSSs. The network 106 comprises one or more public networks, one or more private networks, or a combination thereof. The RAN 102 may from some points of view be considered to be part of the network 106 but is illustrated separately in FIG. 1 to promote improved description of the system 100.

The cell site maintenance tracking system 108 is a system implemented by one or more computers. Computers are discussed further hereinafter. The cell site maintenance tracking system 108 is used to track maintenance activities on network elements (e.g., cell site equipment, routers, gateways, and other network equipment).

The alarm configuration system 110 is a system implemented by one or more computers. The alarm configuration system 110 allows users to define rules and instructions for handling alarms, for example rules for automatic processing of alarms by the automated alarms handling system 112. The alarm configuration system 110 may define rules for when an alarm leads to automatic generation of an incident report, as described herein.

Alarms are flowed up from NEs of the RAN 102 via the OSSs 104 to be stored in the data store 120. The NOC dashboard 116 can access the alarms stored in the data store 120 and provide a list of alarms on a display screen used by NOC personnel. NOC personnel can manually open incident reports on these alarms. In an embodiment, the NOC dashboard 116 provides a system that NOC personnel can use to monitor health of a carrier network (e.g., monitor the RAN 102 and at least portions of the network 106), to monitor alarms, to drill down to get more details on alarms and on NE status, to review incident reports, and to take corrective actions to restore NEs to normal operational status. The NOC dashboard 116 may interact with the data store 120, with the cell site maintenance tracking system 108, the OSSs 104, the RAN 102, and other systems. NOC personnel can use the NOC dashboard 116 to manually create incident reports based on alarms reviewed in a user interface of the NOC dashboard 116.

The incident reporting application (or system) 118 can monitor the alarms stored in the data store 120 and automatically generate incident reports on these alarms based in part on the alarm configurations created and maintained by the alarms configuration system 110. For example, an alarm configuration rule defined by the alarm configuration system 110 may indicate that an incident report is not to be opened related to a specific alarm until the alarm has been active for a predefined period of time, for example for five minutes, for ten minutes, for fifteen minutes, for twenty minutes, for twenty-five minutes, or some other period of time less than two hours. The time criteria for auto generation of incident reports may be useful to avoid opening and tracking incidents that are automatically resolved by other components of the system 100, as described further hereinafter. Incident reports may be referred to in some contexts or by other communication service providers as tickets or trouble tickets.

The incident management application 114 may operate upon incident reports in a sequence of processes. In an embodiment, the incident management application 114 may perform automated triage on incident reports that includes automated enrichment of alarms and/or incident reports, automated dispatch to field operations personnel for some incident reports, and automated testing. Automated enrichment may comprise looking-up relevant information from a plurality of disparate sources and attaching this relevant information to the incident report. The looked-up information may comprise local environmental information such as weather reports, rainfall amounts, temperature, wind. The looked-up information may comprise logs of recent maintenance activities at the affected NE.

The automated triage process may involve determining a probable root cause for the incident and adding this to the incident report during the enrichment action. The probable root causes may be categorized as related to electric power, backhaul (e.g., transport), maintenance, or equipment (e.g., RAN hardware related), but within these general categories it is understood there may be a plurality of more precise probable root causes. The automated triage process can assign an incident report to personnel for handling based on its determination of the probable root cause of the incident report.

In an embodiment, the incident management application 114 may automatically close an incident report when NE status warrants such automated closure. Automated closure may happen because NOC personnel have taken manual corrective action to restore proper function of one or more NEs. Automated closure may happen because the incident management application 114 determines that the incident report was created pursuant to a maintenance event that extended beyond the scheduled maintenance interval and that the scheduled maintenance interval was later extended, but extended after a related incident report had already been generated. The incident management application 114 may perform automated remediation of alarm conditions associated with incident reports. For example, cell sites can be reset to restore operation and clear alarmed conditions. For example, cell sites can be locked and unlocked to restore operation and clear alarmed conditions. Locking a cell site may refer to administratively turning the cell site off, such that new traffic is blocked and existing traffic may be rerouted to another cell site. Unlocking a cell site may refer to reenabling the cell site for user connections. Cell sites may also be locked when additional capacity or equipment is being added to the network or cell site, which is not ready for production or customer traffic to attach to the cell site. For example, cell sites may be resynched with GPS. For example, a software or firmware update may be pushed to cell sites.

As mentioned above, when a network element (NE) is in maintenance, alarms that may occur on the NE may be suppressed, to avoid unnecessarily opening incident reports related to such alarms that may be generated because of unusual conditions the equipment may undergo pursuant to the maintenance event. When a maintenance event is completed, maintenance technicians may be expected to check and clear all alarms pending on the subject NE before the end of the maintenance interval, or period of time scheduled for the maintenance activity. However, as mentioned above, this is not always the case. Maintenance technicians may forget to check and clear all alarms before the end of the maintenance interval, or maintenance technicians may not catch the alarms and resolve the underlying incident before the end of the maintenance interval. In this way, maintenance technicians may, in some cases, end the maintenance event prior to checking and clearing one or more alarms pending on an NE.

Rather than generating an incident report for each of these alarms and forwarding these incident reports to the NOC dashboard system 116 for processing and resolution, the embodiments disclosed herein may instead generate a notification associated with the incident report and send the notification directly to a maintenance device 122 owned and operated by the maintenance technician. In an embodiment, the data store 120 may include records 126 for different maintenance events occurring in the communication system 100. Each record 126 may include maintenance data related to each maintenance event. For example, the record 126 for a maintenance event may include a maintenance identifier, a status of the maintenance (e.g., whether maintenance is being performed or is complete), whether the maintenance event is service impacting, a history of maintenance intervals for the maintenance event, one or more technologies on which the maintenance event is performed, one or more components of the cell site upon which the maintenance event is performed, whether the maintenance event is part of a large scale event, and/or other data describing maintenance actions performed to resolve an incident that triggered the maintenance event. In an embodiment, the incident reporting application 118 may add a maintenance identifier, obtained, for example, from records 126 in the data store 120, to the alarm and/or the incident report. The incident reporting application 118 may use the maintenance identifier to identify the maintenance technician and the method of communicating with the maintenance technician, to send the notification directly to the maintenance technician. The maintenance technician may then receive the notification and act accordingly, or redirect the notification back to the NOC dashboard system 116.

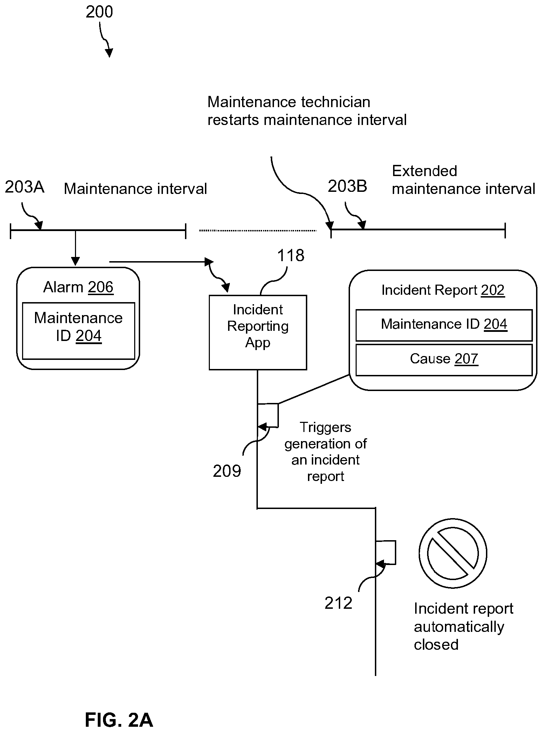

Turning now to FIGS. 2A-2D, shown are diagrams illustrating the detection of alarms during a maintenance interval and again subsequent to the expiration of the maintenance interval, triggering the incident report creation and notification methods disclosed herein. In particular, each of the diagrams of FIGS. 2A-D may represent various use cases of the incident report creation and notification methods disclosed herein based on different conditions existing when an alarm may have been triggered.

Specifically referring now to FIG. 2A, shown is a diagram 200 illustrating an example incident report creation and notification method according to various embodiments disclosed herein. In particular, diagram 200 illustrates an example of automatically closing an incident report 202 created pursuant to a maintenance event that extended beyond the scheduled maintenance interval 203A. However, the maintenance technician created another scheduled maintenance interval 203B, thereby extending the original maintenance interval 203A after related incident report 202 had already been generated.

As shown in FIG. 2A, an alarm 206 may be triggered or activated by an NE in the communication system 100 in response to an incident at or around the NE, causing a fault or failure to occur at the NE. For example, the NE may generate the alarm in response to detecting a fault or failure, and the alarm may include data regarding the fault or failure, such as, for example, a state of the NE and maintenance data if applicable. For example, the maintenance data may indicate a maintenance status at the time the alarm 206 was generated, in which the maintenance status may indicate whether the NE was under a maintenance or not. The maintenance data may also include an indication as to whether the maintenance event is service impacting or not.

The incident reporting application 118 may obtain (e.g., detect) the alarm 206, but may determine that the alarm 206 was activated during a maintenance interval 203A (i.e., when a maintenance technician was performing a maintenance event at or around the NE). The incident reporting application 118 may make this determination based on the maintenance data included in the alarm 206.

When the alarm 206 is determined as being activated during a maintenance interval 203A, the incident reporting application 118 may suppress generation of corresponding incident report 202 (i.e., be prohibited from generating an incident report 202 based on the alarm 206). In an embodiment, the incident reporting application 118 may however add data to the alarm 206 that may facilitate more efficient processing of the alarm 206 later down the line. For example, the incident reporting application 118 may add a maintenance identifier 204 to the alarm 206 even when the alarm 206 is being suppressed. The incident reporting application 118 may obtain the maintenance identifier 204 from, for example, the data store 120. The data store 120 may store records 126 for each maintenance event occurring in the communication system. The record 126 may include, for example, the maintenance identifier 204 along with the other maintenance data that may have been provided in the alarm 206 or by the maintenance technician upon logging the maintenance event through an application at the maintenance device 122.

The maintenance interval 203A may eventually expire when the period of time indicated in the maintenance interval 203A terminates. The maintenance technician may have checked, resolved, and cleared out some alarms 206, but also may not have cleared out one or more suppressed alarms 206. In this case, the alarm 206 may become unsuppressed after the expiration of the maintenance interval 203A, and the incident reporting application 118 may detect that the alarm 206 is still active after the maintenance interval 203A expires. In some cases, the incident reporting application 118 may not add the maintenance identifier 204 to the alarm 206 until after the maintenance interval 203A has expired. In either case, the incident reporting application 118 may generate an incident report 202 based on the alarm 206 after the expiration of the maintenance interval 203A.

At step 209, the incident reporting application 118 may generate the incident report 202. The incident report may be generated to include the probable root cause 207 as being a maintenance event, and particularly, the maintenance event identified by the maintenance identifier 204 included in the alarm 206. In an embodiment, the incident reporting application 118 may also add the maintenance identifier 204 to the incident report 202. The incident report 202 may include other data describing the incident and/or the alarm 206, such as, for example, a time of the alarm 206, data describing the incident itself, the NE that generated the alarm 206, technologies that are affected by the incident (e.g., 3G, 4G, 5G, LTE communications), a specific component of the NE (e.g., radio head) upon which maintenance was performed, etc.

In an embodiment, before the incident reporting application 118 transmits the incident report 202 or a notification of the incident report 202 to the maintenance device 122 or the NOC dashboard system 116, the incident reporting application 118 may wait a pre-determined period of time. During this time, the incident reporting application 118 may check a maintenance history of the maintenance event to determine whether the maintenance interval 203A was extended, to an extended maintenance interval 203B. In this case, there may be a gap in between the first maintenance interval 203A and the second maintenance interval 203B, and during both of these intervals 203A-B the incident report 202 generation may be suppressed for this alarm. However, in the case shown in FIG. 2A, the incident reporting application 118 created the incident report 202 during the gap, when there was no incident report 202 suppression.

In an embodiment, the incident reporting application 118 may transmit a notification associated with the incident report 202 to the maintenance device 122 to possibly start the second maintenance interval 203B (i.e., extend the original maintenance interval 203A). In this particular example, the notification may be an instruction for the application at the maintenance device 122 to display a prompt at the maintenance device 122. The prompt may indicate that an alarm 206 has been detected because the maintenance interval 203A has expired, and a request for the maintenance technician to indicate whether to extend the maintenance interval 203A to 203B. In an embodiment, the application may provide a user interface by which the maintenance technician may select "yes" or "no" in response to the request, type in a particular time period by which to extend the maintenance interval 203A to 203B, select a time period by which to extend the maintenance interval 203A to 203B from a drop down menu or other type of menu, or any other type of user interface element by which the maintenance technician may provide additional instructions to extend the maintenance interval 203A to 203B. The instructions to extend the maintenance interval 203A to 203B may be forwarded back to data store 120 and the record 126 associated with maintenance event. For example, the maintenance interval history in the record 126 may be updated to indicate the extension.

When the incident reporting application 118 determines that the maintenance interval 203B is started, the incident reporting application 118 may determine that the alarm 206 should still be suppressed. In this case, at step 212, the incident reporting application 118 may automatically close the incident report 202, which may involve discarding or dropping the incident report 202. A notification may not be sent to the maintenance device 122, and the incident report 202 may not be forwarded to the NOC dashboard system 116 or any other central monitoring station.

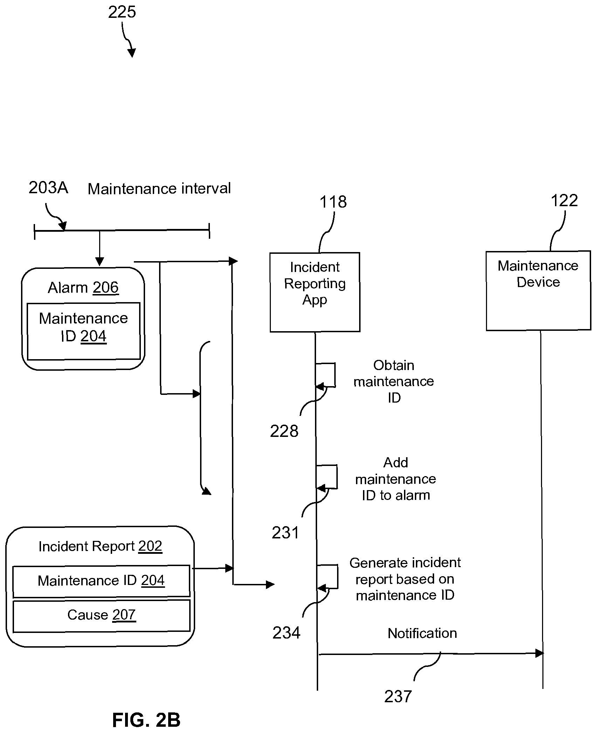

Turning now to FIG. 2B, shown is a diagram 225 illustrating an example incident report creation and notification method according to various embodiments disclosed herein. In particular, diagram 225 illustrates an example of processing an alarm 206 that was activated during a maintenance interval 203A and remained active after expiration of the maintenance interval 203A.

Similar to diagram 200 of FIG. 2A, an alarm 206 may be generated by an NE at some point during the maintenance interval 203A, a time in which the maintenance technician may be performing a maintenance event at or around the NE. Either during the maintenance interval 203A or shortly after the expiration of the maintenance interval 203A (and after determining that the alarm 206 is still active), the incident reporting application 118 may obtain the maintenance identifier 204 corresponding to the maintenance event, at step 228. As mentioned above, the maintenance identifier 204 may be obtained from the data store 120, and in particular, from a record 126 corresponding to the maintenance event. The incident reporting application 118 may also add the maintenance identifier 204 to the alarm 206, at step 231.

After the maintenance interval 203A expires, the incident reporting application 118 may determine that the alarm 206 is still active. For example, the incident reporting application 118 may periodically, or according to a pre-determined schedule, poll suppressed alarms 206 to determine whether the corresponding maintenance interval 203A for the alarms 206 has expired. When the alarm 206 is determined to be still active, at step 234, the incident reporting application 118 may be triggered to generate the incident report 202 based on the maintenance identifier 204. The incident report 202 may include the maintenance identifier 204, the root cause 207 of the incident that gave rise to the incident report 202 (i.e., the maintenance event), and/or any other data related to the incident and/or the maintenance event.

The incident reporting application 118 or the incident management application 114 may use the maintenance identifier 204 to obtain an identity of the maintenance technician when the incident report 202 includes the maintenance identifier 204 and/or an indication that the root cause 207 of the incident is the maintenance event. The identity of maintenance technician may be obtained from, for example, the record 126 describing the maintenance event stored at the data store 120. For example, the record 126 may store a name of the maintenance technician and a method of communicating with the maintenance device 122. For example, the method of communicating with the maintenance device 122 may include a phone number of the maintenance device 122, an email address of the maintenance technician, an application through which messages may be sent to the maintenance device 122, and/or any other type of method of communicating directly with maintenance technician. The term "maintenance device 122" as used herein should be appreciated to include multiple different devices owned and operated by the maintenance technician. In this way, the incident reporting application 118 or the incident management application 114 may transmit a notification associated with the incident report 202 to the maintenance device 122 using the method of communicating indicated in the record 126, at step 237. For example, transmitting the notification to the maintenance device 122 may involving sending a text message, sending an email, or calling (either manually or robotically) the maintenance device 122 and notifying the maintenance technician of the active alarm 206.

The notification associated with the incident report 202 may include various different types of information, and in some cases, may trigger an application at the maintenance device 122 to display a user interface by which the maintenance technician may provide additional data to facilitate checking and clearing the alarm 206. For example, the notification may include the incident report 202 itself, with details regarding the alarm 206 (e.g., the NE upon which the maintenance event was performed, a time of the maintenance event, details regarding the incident that triggered the alarm 206, technologies and other components at or near the NE affected by the incident, whether the incident is service impacting or not, etc.). In this case, the notification may simply present as a message, email, or call to the maintenance technician at the maintenance device, requesting the maintenance technician to review, resolve, and clear the alarm 206. In some embodiments, the notification may trigger the maintenance device 122 to present a user interface by which the maintenance technician may provide an indication to the incident reporting application 118, incident management application 114, or NOC dashboard 116 that the maintenance technician intends check, resolve, and clear the alarm 206.

In some cases, the notification may not include details regarding an incident report, and may instead present a message or prompt, which may be generated by the application in response to receiving the notification. In this case, the application may receive a notification that an alarm 206 is active at a location in which maintenance was performed by the maintenance technician, and the application may display at the maintenance device 122 a user interface requesting the maintenance technician to resolve and clear this alarm 206. The maintenance technician may input a selection through the user interface indicating whether the maintenance technician intends to resolve and clear the alarm 206, and this selection may be provided to the incident reporting application 118, incident management application 114, or NOC dashboard 116. The selection may indicate whether the incident report 202 needs to be forwarded to the NOC dashboard 116 for further processing. When the maintenance technician selects to accept the alarm 206, the incident report 202 may not need to be forwarded to the NOC dashboard 116 for further processing. If accepted, the application may display further details regarding the incident report 202. In contrast, when the maintenance technician rejects the alarm 206, the incident report 202 may be forwarded to the NOC dashboard 116 for further processing.

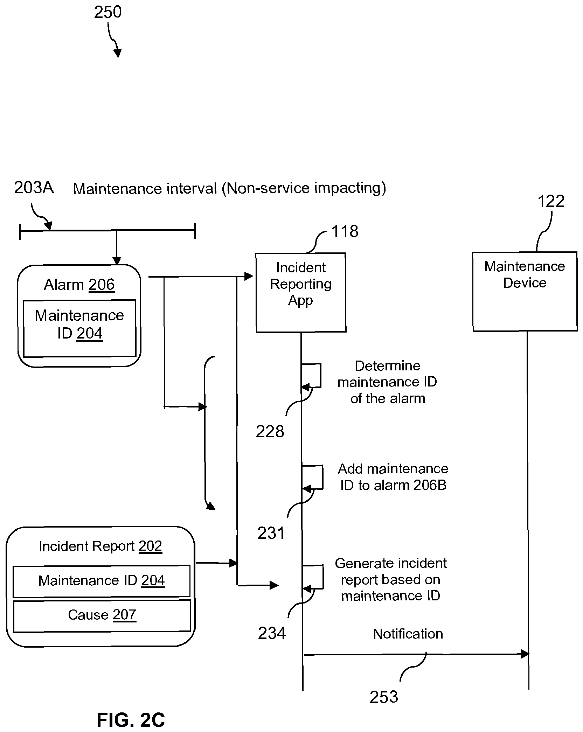

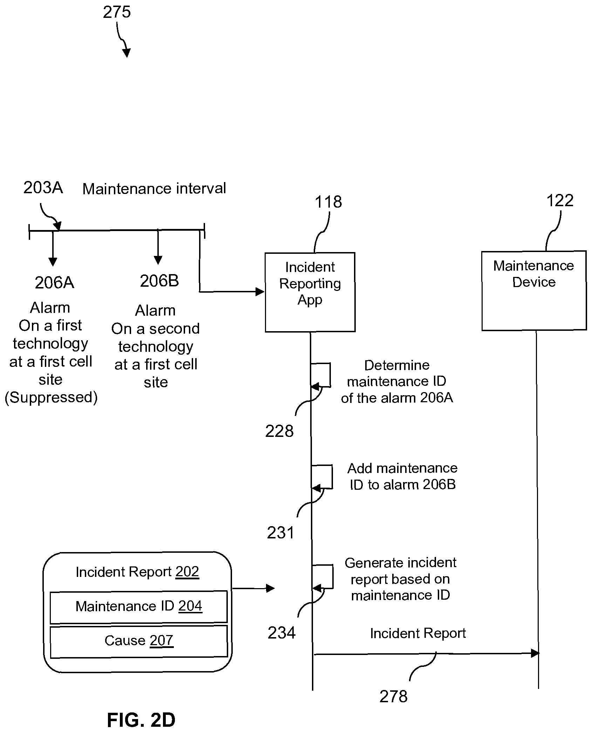

In other cases, the notification may instruct the application at the maintenance device to display additional details regarding the incident that triggered the alarm 206, and request an update to the maintenance event data stored at the record 226. Examples of these cases are shown below with reference to FIGS. 2C and 2D.

Turning now to FIG. 2C, shown is a diagram 250 illustrating an example incident report creation and notification method according to various embodiments disclosed herein. Diagram 250 is similar to diagram 225 in that diagram 250 also illustrates an example of processing an alarm 206 that was activated during a maintenance interval 203A and remained active after expiration of the maintenance interval 203A. To this end, the incident reporting application 118 in diagram 250 similarly detects an alarm 206 generated during a maintenance interval 203A, which triggers the incident reporting application 118 to perform steps 228, 231, and 234 to generate the incident report 202. However, the maintenance event in diagram 250 may have been mistakenly marked and recorded as a non-service impacting maintenance event, and the alarm 206 may be associated with a failure or fault occurring as a result of the maintenance event.

For example, the maintenance technician may have incorrectly marked a maintenance event at a NE as non-service impacting initially. Prior to or at the time of performing the maintenance actions for the maintenance event, the maintenance technician may have provided maintenance data via the application at the maintenance device 122. The maintenance data may have included an indication regarding whether the maintenance event is service impacting or non-service impacting. The application may forward this data to the data store, which may be stored in the record 126 in association with the maintenance event. As mentioned above, when the maintenance event is service impacting, alarms 206 may be suppressed since service is impacted. However, when a maintenance event is non-service impacting, alarms 206 may not need to be suppressed since the maintenance actions of the maintenance event may not have any impact on service. Therefore, any alarms 206 that may be triggered at or around the NE in maintenance during the maintenance interval of a non-service impacting maintenance event may be flagged as needing to be sent directly to the maintenance technician, since the service impacting nature of the maintenance event may have been entered into the system incorrectly.

In this case, at step 253, the incident reporting application 118 may transmit the notification indicating that an alarm 206 has been triggered at or around the NE that indeed seems to be caused by the maintenance event (i.e., the maintenance event appears to actually be service impacting). The notification may indicate this inconsistency and include an instruction for the application at the maintenance device 122 to present a user interface by which the maintenance technician may update the maintenance event as being service impacting. The application may forward this update to the incident reporting application 118, incident management application 114, or NOC dashboard 116 to update the record 126 for the maintenance event accordingly.

Turning now to FIG. 2D, shown is a diagram 275 illustrating an example incident report creation and notification method according to various embodiments disclosed herein. Diagram 275 is similar to diagram 225 in that diagram 275 also illustrates an example of processing an alarm 206 that was activated during a maintenance interval 203A and remained active after expiration of the maintenance interval 203A. However, the maintenance event corresponding to the maintenance interval 203A may specifically correspond to only a first type of technology (e.g., 5G), for example, at a first cell site (i.e., NE upon which the maintenance event is being performed). The maintenance event may also be marked as service impacting, and thus, the incident reporting application 118 may be suppressed from generating an incident report 202 based on any alarms 206A received for the first type of technology at the first cell site. However, since the maintenance event is specific to the first type of technology, the incident reporting application 118 may not be suppressed from generating an incident report 202 based on alarms 206B received for the second type of technology (e.g., LTE) at the first cell site.

To this end, the incident reporting application 118 in diagram 275 similarly detects alarms 206A and 206B generated during a maintenance interval 203A. While incident report generation based on the alarm 206A may be suppressed since the alarm 206A is for the first type of technology, the incident report generation based on the alarm 206B may not be suppressed since the alarm 206B is for the second type of technology. The incident reporting application 118 may then be triggered to perform steps 228, 231, and 234 to generate the incident report 202 based on the alarm 206B, and one or all of these steps 228, 231, and 234 may be performed during the maintenance interval 203A.

It may be the case that the maintenance technician may have incorrectly marked the maintenance event as only impacting the first type of technology, when in reality the maintenance event may impact other types of technologies as well, such as the second type of technology. Prior to or at the time of performing the maintenance actions for the maintenance event, the maintenance technician may have provided maintenance data via the application at the maintenance device 122. The maintenance data may have included an indication of the types of technologies at the first cell site that may be impacted by the maintenance actions performed during the maintenance event. The application may forward this data to the data store, which may be stored in the record 126 in association with the maintenance event. As mentioned above, when a record 126 associated with a maintenance event only indicates that alarms 206A associated with one type of technology should be suppressed, then the incident reporting application 118 may still generate incident reports for any alarms 206B associated with any other type of technology. Therefore, any alarms 206B that may be triggered for other types of technologies at the cell site during the maintenance interval may be flagged as needing to be sent directly to the maintenance technician, since the affected technologies marked with the maintenance event may have been entered into the system incorrectly.

In this case, at step 278, the incident reporting application 118 may transmit the notification indicating that an alarm 206B has been triggered at or around the NE but at another type of technology (e.g., LTE) (i.e., the maintenance event affects more than just the 5G communications, but also the LTE communications). The notification may indicate this inconsistency, and the application may present a user interface by which the maintenance technician may update the maintenance event as affecting multiple technologies. The update may indicate that alarms 206B for all the technologies listed in the update may be suppressed during the maintenance interval 203A. The application may forward this update to the incident reporting application 118, incident management application 114, or NOC dashboard 116 to update the record 126 for the maintenance event accordingly.

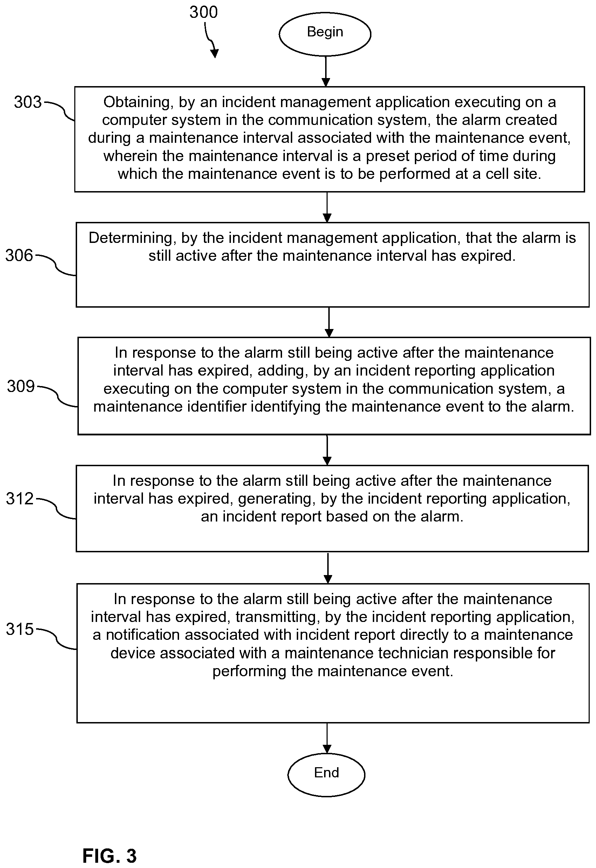

Turning now to FIG. 3, a method 300 is described. In an embodiment, method 300 may be a method for resolving an alarm 206 triggered at a time of a maintenance event in a communication system 100. Method 300 may be performed to detect and notify a maintenance technician of an alarm 206 that was generated during a maintenance interval but is still active after expiration of the maintenance interval.

At step 303, method 300 comprises obtaining, by an incident management application 114 executing on a computer system in the communication system, the alarm 206 created during a maintenance interval 203 associated with the maintenance event. In an embodiment, the maintenance interval 203 is a preset period of time during which the maintenance event is to be performed at a cell site.

At step 306, method 300 comprises determining, by the incident management application 114, that the alarm 206 is still active after the maintenance interval 203 has expired. Steps 309, 312, and 315 of method 300 may be performed in response to determining that the alarm 206 is still active after the maintenance interval 203 has expired.

At step 309, method 300 comprises adding, by an incident reporting application 118 executing on the computer system in the communication system, a maintenance identifier 204 identifying the maintenance event to the alarm 206. At step 312, method 300 comprises generating, by the incident reporting application 118, an incident report 202 based on the alarm 206. At step 315, method 300 comprises transmitting, by the incident reporting application 118, a notification associated with incident report 202 directly to a maintenance device 122 associated with a maintenance technician responsible for performing the maintenance event. As a result, the maintenance technician may resolve the incident report 202 before leaving a cell site or otherwise resolve the incident report 202 promptly.

In an embodiment, method 300 may further comprise maintaining, in a data store 120 of the communication system 100, the maintenance identifier 204 identifying the maintenance event and an identity of the maintenance technician responsible for performing the maintenance event, in which the identity of the maintenance technician comprises a method of communicating with the maintenance device 122 of the maintenance technician. In an embodiment, the alarm indicates a status of the maintenance event and whether the maintenance event is service impacting. In an embodiment, when the maintenance event is service impacting and the maintenance interval 203 is still open, the incident reporting application 118 is not permitted to generate the incident report 202 based on the alarm 206. In an embodiment, the maintenance identifier 204 is an incident record or a change record. In an embodiment, the notification indicates at least one of the following: details from the incident report 202, a notification that the incident report 202 has been created for the maintenance event, a request for the maintenance technician to accept the incident report 202 and resolve an incident at the cell site that triggered the alarm 206 during the maintenance interval 203 and has not yet been cleared, a request for the maintenance technician to extend the maintenance interval 2031 and thereby close the incident report 202, a request for the maintenance technician to update the maintenance event to be a service impacting maintenance event, or a request for the maintenance technician to expand technologies affected by maintenance event.

In an embodiment, the maintenance event affects a plurality of different cell sites. Multiple alarms 206 from the multiple different cell sites may be suppressed across the different cell sites during the maintenance interval 203. In an embodiment, upon expiration of the maintenance interval 203, if multiple alarms 206 from multiple different cell sites are still active, the incident reporting application 118 or the incident management application 114 may associate the multiple alarms 206 with a large-scale event (LSE). A large-scale event may refer to an incident that affects the multiple cell sites and the communications provided by the multiple cell sites. In an embodiment, the incident reporting application 118 may generate a single incident report 202 for all of these alarms 206, even though all of these alarms 206 originated across different cell sites. The incident reporting application 118 may transmit a notification regarding the alarms 206 across the different cell sites to the maintenance technician. In this way, the maintenance technician may resolve the incident that gave rise to the multiple alarms 206 across different cell sites, rather than different incident reports 202 being created for all the different alarms 206, thereby saving valuable networking, computing, and NOC resources.

In an embodiment, the incident management application 114 may monitor traffic and behavior of the NE to determine whether the maintenance interval has expired. For example, a cell site may only take certain actions when the cell site is not in maintenance. When the incident management application 114 does not have explicit knowledge of a maintenance interval 203, the incident management application 114 may monitor the traffic and behavior of the cell site to determine whether the cell site is performing any actions that would not otherwise be performed when the cell site is in maintenance. In this way, the incident management application 114 may inherently determine whether an NE is under maintenance or not, which as described herein, may affect whether incident reports 202 are created for alarms 206 and may affect who receives the incident reports (i.e., the NOC dashboard system 116 or the maintenance technician).

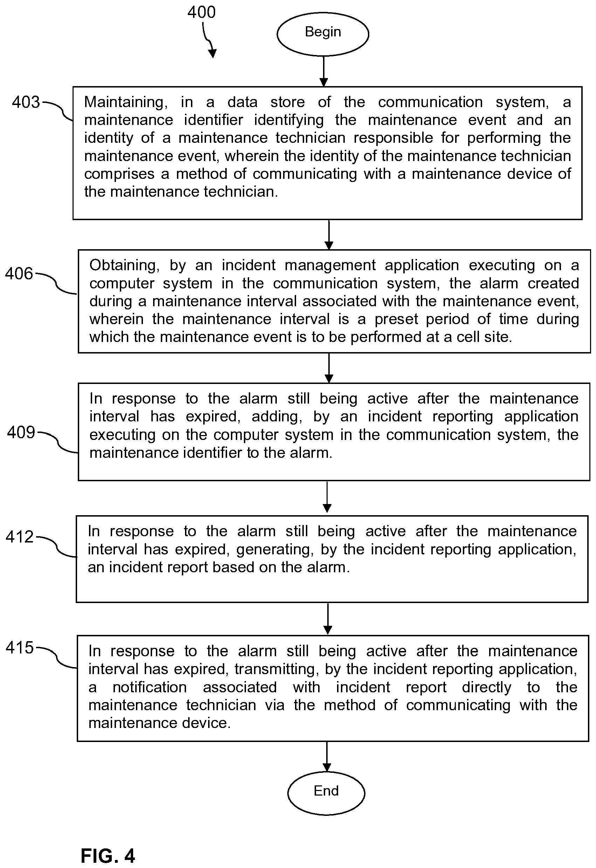

Turning now to FIG. 4, a method 400 is described. In an embodiment, method 400 may be a method for resolving an alarm 206 triggered at a time of a maintenance event in a communication system 100. Method 400 may be performed to detect and notify a maintenance technician of an alarm 206 that was generated during a maintenance interval but is still active after expiration of the maintenance interval.

At step 403, method 400 comprises maintaining, in a data store 120 of the communication system 100, a maintenance identifier 204 identifying the maintenance event and an identity of a maintenance technician responsible for performing the maintenance event. In an embodiment, the identity of the maintenance technician comprises a method of communicating with a maintenance device 122 of the maintenance technician. In an embodiment, a record 126 at the data store 120 may store data describing the maintenance event, including, for example, the maintenance identifier 204, an identity of the maintenance technician, and a method of communicating with the maintenance device.

At step 406, method 400 comprises obtaining, by an incident management application 114 executing on a computer system in the communication system, the alarm 206 created during a maintenance interval 203 associated with the maintenance event. The maintenance interval 203 is a preset period of time during which the maintenance event is to be performed at a cell site.

Steps 409, 412, and 415 may be performed in response to the alarm 206 still being active after the maintenance interval 203 has expired. At step 409, method 400 comprises adding, by an incident reporting application 118 executing on the computer system in the communication system, the maintenance identifier 204 to the alarm 206. At step 412, method 400 comprises generating, by the incident reporting application 118, an incident report 202 based on the alarm 206. At step 415, method 400 comprises transmitting, by the incident reporting application 118, a notification associated with incident report 202 directly to the maintenance technician via the method of communicating with the maintenance device 122. For example, the maintenance technician may resolve the incident report 202 before leaving a cell site or otherwise resolve the incident report 202 promptly. The maintenance technician may return to the cell site to fix something he or she may have inadvertently broke or altered. Alternatively, the maintenance technician may use the maintenance device 122 to take an action, such as, for example, extend the maintenance window, send data back to the system, etc.

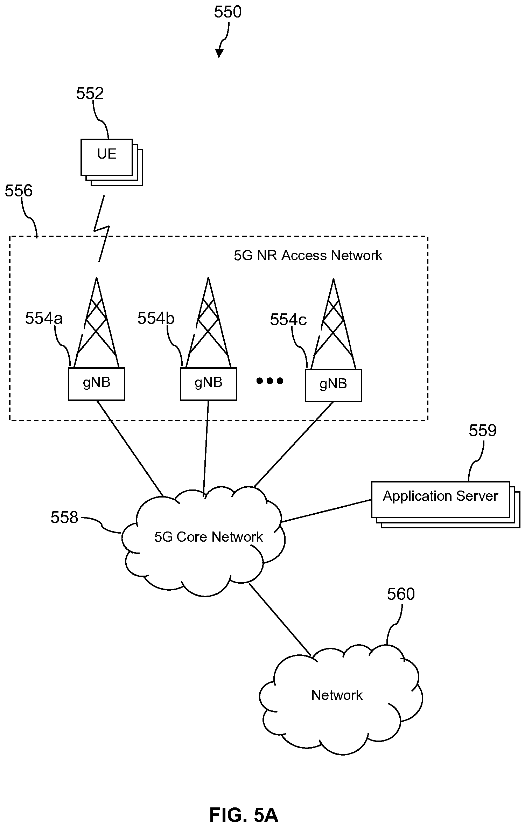

Turning now to FIG. 5A, an exemplary communication system 550 is described. Typically the communication system 550 includes a number of access nodes 554 that are configured to provide coverage in which UEs 552 such as cell phones, tablet computers, machine-type-communication devices, tracking devices, embedded wireless modules, and/or other wirelessly equipped communication devices (whether or not user operated), can operate. The access nodes 554 may be said to establish an access network 556. The access network 556 may be referred to as a radio access network (RAN) in some contexts. In a 5G technology generation an access node 554 may be referred to as a next Generation Node B (gNB). In 4G technology (e.g., long term evolution (LTE) technology) an access node 554 may be referred to as an evolved Node B (eNB). In 3G technology (e.g., code division multiple access (CDMA) and global system for mobile communication (GSM)) an access node 554 may be referred to as a base transceiver station (BTS) combined with a base station controller (BSC). In some contexts, the access node 554 may be referred to as a cell site or a cell tower. In some implementations, a picocell may provide some of the functionality of an access node 554, albeit with a constrained coverage area. Each of these different embodiments of an access node 554 may be considered to provide roughly similar functions in the different technology generations.

In an embodiment, the access network 556 comprises a first access node 554a, a second access node 554b, and a third access node 554c. It is understood that the access network 556 may include any number of access nodes 554. Further, each access node 554 could be coupled with a core network 558 that provides connectivity with various application servers 559 and/or a network 560. In an embodiment, at least some of the application servers 559 may be located close to the network edge (e.g., geographically close to the UE 552 and the end user) to deliver so-called "edge computing." The network 560 may be one or more private networks, one or more public networks, or a combination thereof. The network 560 may comprise the public switched telephone network (PSTN). The network 560 may comprise the Internet. With this arrangement, a UE 552 within coverage of the access network 556 could engage in air-interface communication with an access node 554 and could thereby communicate via the access node 554 with various application servers and other entities.

The communication system 550 could operate in accordance with a particular radio access technology (RAT), with communications from an access node 554 to UEs 552 defining a downlink or forward link and communications from the UEs 552 to the access node 554 defining an uplink or reverse link. Over the years, the industry has developed various generations of RATs, in a continuous effort to increase available data rate and quality of service for end users. These generations have ranged from "1G," which used simple analog frequency modulation to facilitate basic voice-call service, to "4G" - such as Long Term Evolution (LTE), which now facilitates mobile broadband service using technologies such as orthogonal frequency division multiplexing (OFDM) and multiple input multiple output (MIMO).

Recently, the industry has been exploring developments in "5G" and particularly "5G NR" (5G New Radio), which may use a scalable OFDM air interface, advanced channel coding, massive MIMO, beamforming, mobile mmWave (e.g., frequency bands above 24 GHz), and/or other features, to support higher data rates and countless applications, such as mission-critical services, enhanced mobile broadband, and massive Internet of Things (IoT). 5G is hoped to provide virtually unlimited bandwidth on demand, for example providing access on demand to as much as 20 gigabits per second (Gbps) downlink data throughput and as much as 10 Gbps uplink data throughput. Due to the increased bandwidth associated with 5G, it is expected that the new networks will serve, in addition to conventional cell phones, general internet service providers for laptops and desktop computers, competing with existing ISPs such as cable internet, and also will make possible new applications in internet of things (IoT) and machine to machine areas.

In accordance with the RAT, each access node 554 could provide service on one or more radio-frequency (RF) carriers, each of which could be frequency division duplex (FDD), with separate frequency channels for downlink and uplink communication, or time division duplex (TDD), with a single frequency channel multiplexed over time between downlink and uplink use. Each such frequency channel could be defined as a specific range of frequency (e.g., in radio-frequency (RF) spectrum) having a bandwidth and a center frequency and thus extending from a low-end frequency to a high-end frequency. Further, on the downlink and uplink channels, the coverage of each access node 554 could define an air interface configured in a specific manner to define physical resources for carrying information wirelessly between the access node 554 and UEs 552.

Without limitation, for instance, the air interface could be divided over time into frames, subframes, and symbol time segments, and over frequency into subcarriers that could be modulated to carry data. The example air interface could thus define an array of time-frequency resource elements each being at a respective symbol time segment and subcarrier, and the subcarrier of each resource element could be modulated to carry data. Further, in each subframe or other transmission time interval (TTI), the resource elements on the downlink and uplink could be grouped to define physical resource blocks (PRBs) that the access node could allocate as needed to carry data between the access node and served UEs 552.

In addition, certain resource elements on the example air interface could be reserved for special purposes. For instance, on the downlink, certain resource elements could be reserved to carry synchronization signals that UEs 552 could detect as an indication of the presence of coverage and to establish frame timing, other resource elements could be reserved to carry a reference signal that UEs 552 could measure in order to determine coverage strength, and still other resource elements could be reserved to carry other control signaling such as PRB-scheduling directives and acknowledgement messaging from the access node 554 to served UEs 552. And on the uplink, certain resource elements could be reserved to carry random access signaling from UEs 552 to the access node 554, and other resource elements could be reserved to carry other control signaling such as PRB-scheduling requests and acknowledgement signaling from UEs 552 to the access node 554.

The access node 554, in some instances, may be split functionally into a radio unit (RU), a distributed unit (DU), and a central unit (CU) where each of the RU, DU, and CU have distinctive roles to play in the access network 556. The RU provides radio functions. The DU provides L1 and L2 real-time scheduling functions; and the CU provides higher L2 and L3 non-real time scheduling. This split supports flexibility in deploying the DU and CU. The CU may be hosted in a regional cloud data center. The DU may be co-located with the RU, or the DU may be hosted in an edge cloud data center.

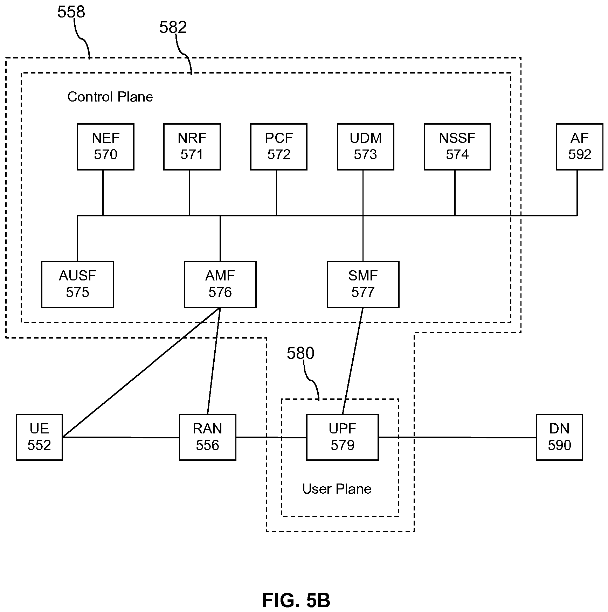

Turning now to FIG. 5B, further details of the core network 558 are described. In an embodiment, the core network 558 is a 5G core network. 5G core network technology is based on a service based architecture paradigm. Rather than constructing the 5G core network as a series of special purpose communication nodes (e.g., an HSS node, a MME node, etc.) running on dedicated server computers, the 5G core network is provided as a set of services or network functions. These services or network functions can be executed on virtual servers in a cloud computing environment which supports dynamic scaling and avoidance of long-term capital expenditures (fees for use may substitute for capital expenditures). These network functions can include, for example, a user plane function (UPF) 579, an authentication server function (AUSF) 575, an access and mobility management function (AMF) 576, a session management function (SMF) 577, a network exposure function (NEF) 570, a network repository function (NRF) 571, a policy control function (PCF) 572, a unified data management (UDM) 573, a network slice selection function (NSSF) 574, and other network functions. The network functions may be referred to as virtual network functions (VNFs) in some contexts.

Network functions may be formed by a combination of small pieces of software called microservices. Some microservices can be re-used in composing different network functions, thereby leveraging the utility of such microservices. Network functions may offer services to other network functions by extending application programming interfaces (APIs) to those other network functions that call their services via the APIs. The 5G core network 558 may be segregated into a user plane 580 and a control plane 582, thereby promoting independent scalability, evolution, and flexible deployment.

The UPF 579 delivers packet processing and links the UE 552, via the access network 556, to a data network 590 (e.g., the network 560 illustrated in FIG. 5A). The AMF 576 handles registration and connection management of non-access stratum (NAS) signaling with the UE 552. Said in other words, the AMF 576 manages UE registration and mobility issues. The AMF 576 manages reachability of the UEs 552 as well as various security issues. The SMF 577 handles session management issues. Specifically, the SMF 577 creates, updates, and removes (destroys) protocol data unit (PDU) sessions and manages the session context within the UPF 579. The SMF 577 decouples other control plane functions from user plane functions by performing dynamic host configuration protocol (DHCP) functions and IP address management functions. The AUSF 575 facilitates security processes.

The NEF 570 securely exposes the services and capabilities provided by network functions. The NRF 571 supports service registration by network functions and discovery of network functions by other network functions. The PCF 572 supports policy control decisions and flow based charging control. The UDM 573 manages network user data and can be paired with a user data repository (UDR) that stores user data such as customer profile information, customer authentication number, and encryption keys for the information. An application function 592, which may be located outside of the core network 558, exposes the application layer for interacting with the core network 558. In an embodiment, the application function 592 may be executed on an application server 559 located geographically proximate to the UE 552 in an "edge computing" deployment mode. The core network 558 can provide a network slice to a subscriber, for example an enterprise customer, that is composed of a plurality of 5G network functions that are configured to provide customized communication service for that subscriber, for example to provide communication service in accordance with communication policies defined by the customer. The NSSF 574 can help the AMF 576 to select the network slice instance (NSI) for use with the UE 552.

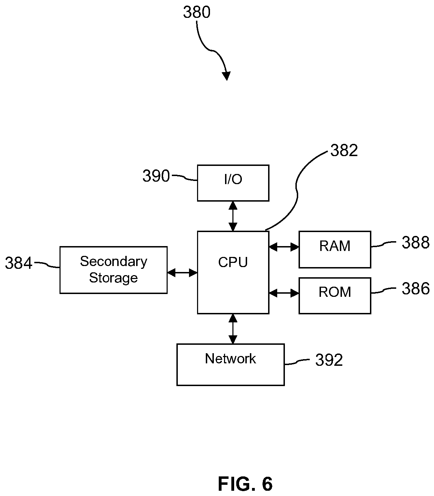

FIG. 6 illustrates a computer system 380 suitable for implementing one or more embodiments disclosed herein. The computer system 380 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB loT), near field communications (NFC) and radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third-party provider. Some cloud computing environments may comprise cloud computing resources owned and operated by the enterprise as well as cloud computing resources hired and/or leased from a third-party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The processor 382 may process the executable instructions and/or data structures in part by directly accessing the computer program product, for example by reading from a CD-ROM disk inserted into a disk drive peripheral of the computer system 380. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A method for resolving an alarm triggered at a time of a maintenance event in a communication system, comprising:
maintaining, in a data store of the communication system, a maintenance identifier identifying the maintenance event and an identity of a maintenance technician responsible for performing the maintenance event, wherein the identity of the maintenance technician comprises a method of communicating with a maintenance device of the maintenance technician,
obtaining, by an incident management application executing on a computer system in the communication system, the alarm created during a maintenance interval associated with the maintenance event, wherein the maintenance interval is a preset period of time during which the maintenance event is to be performed on a network element;
in response to the alarm still being active after the maintenance interval has expired:
adding, by an incident reporting application executing on the computer system in the communication system, the maintenance identifier to the alarm;
generating, by the incident reporting application, an incident report based on the alarm; and
transmitting, by the incident reporting application, a notification associated with incident report directly to the maintenance technician via the method of communicating with the maintenance device.

2. The method of claim 1, wherein the data store comprises a record for the maintenance event, wherein the record comprises at least one of a maintenance identifier, a status of the maintenance event, whether the maintenance event is service impacting, a history of maintenance intervals for the maintenance event, one or more technologies on which the maintenance event is performed, one or more components of the network element upon which the maintenance event is performed, whether the maintenance event is part of a large-scale event, or data describing maintenance actions performed to resolve an incident associated with the maintenance event.

3. The method of claim 1, further comprising monitoring, by the incident management application, traffic and behavior of the network element to determine whether the maintenance interval has expired.

4. A communication system comprising a radio access network, wherein the communication system comprises:
an incident management application executing on a first computer system, wherein the incident management application is configured to:
obtain an alarm created during a maintenance interval associated with a maintenance event, wherein the maintenance interval is a preset period of time during which the maintenance event is to be performed on a network element;
indicate, in the alarm, that incident report creation is to be suppressed for this alarm during the maintenance interval; and
determine that the alarm is still active after the maintenance interval has expired; and
an incident reporting application that executes on a second computer system, wherein the incident reporting application is configured to:
add a maintenance identifier to the alarm, wherein the maintenance identifier identifies the maintenance event;
generate an incident report based on the alarm;
transmit a notification associated with incident report directly to a maintenance device associated with a maintenance technician responsible for performing the maintenance event, wherein the notification requests the maintenance technician to indicate whether to extend the maintenance interval;
receive an indication from the maintenance device to extend the maintenance interval; and
close the incident report when the maintenance interval has been extended.

5. The communication system of claim 4, further comprising a data store configured to store a record for the maintenance event, wherein the record comprising at least one of a maintenance identifier, a status of the maintenance event, whether the maintenance event is service impacting, a history of maintenance intervals for the maintenance event, one or more technologies on which the maintenance event is performed, one or more components of the network element upon which the maintenance event is performed, whether the maintenance event is part of a large scale event, or data describing maintenance actions performed to resolve an incident associated with the maintenance event.

6. The communication system of claim 4, wherein the alarm indicates at least one of a status of the maintenance event or whether the maintenance event is service impacting.

7. The communication system of claim 4, wherein, after the incident report is generated, the incident reporting application is configured to search a record, at a data store, for a maintenance history for the network element, wherein the maintenance history indicates that the maintenance interval has been extended after the incident report is generated.

8. The communication system of claim 4, wherein the maintenance event affects a plurality of different network elements such that alarms are suppressed across the different network elements during the maintenance interval.

9. The communication system of claim 4, wherein the maintenance identifier is stored at a data store in association with maintenance data describing the maintenance event and a method of communicating with the maintenance device.

10. A method for resolving an alarm triggered at a time of a maintenance event in a communication system, comprising:
obtaining, by an incident management application executing on a computer system in the communication system, the alarm created during a maintenance interval associated with the maintenance event, wherein the maintenance interval is a preset period of time during which the maintenance event is to be performed on a network element;
determining, by the incident management application, that the alarm is still active after the maintenance interval has expired;
in response to the alarm still being active after the maintenance interval has expired:
adding, by an incident reporting application executing on the computer system in the communication system, a maintenance identifier identifying the maintenance event to the alarm;
generating, by the incident reporting application, an incident report based on the alarm; and
transmitting, by the incident reporting application, a notification associated with the incident report directly to a maintenance device associated with a maintenance technician responsible for performing the maintenance event.

11. The method of claim 10, further comprising maintaining, in a data store of the communication system, the maintenance identifier identifying the maintenance event and an identity of the maintenance technician responsible for performing the maintenance event, wherein the identity of the maintenance technician comprises a method of communicating with the maintenance device of the maintenance technician.

12. The method of claim 10 or the method of claim 1, wherein the alarm indicates a status of the maintenance event and whether the maintenance event is service impacting, wherein when the maintenance event is service impacting and the maintenance interval is not expired, the incident reporting application is not permitted to generate the incident report based on the alarm.

13. The method of claim 10, the communication system of claim 4 or the method of claim 1, wherein the maintenance identifier is an incident record or a change record.

14. The method of claim 10 or the method of claim 1, wherein the notification indicates at least one of the following:
details from the incident report,
a notification that the incident report has been created for the maintenance event,
a request for the maintenance technician to accept the incident report and resolve an incident report at the network element that triggered the alarm during the maintenance interval and has not yet been cleared,
a request for the maintenance technician to extend the maintenance interval and thereby close the incident report,
a request for the maintenance technician to update the maintenance event to be a service impacting maintenance event, or
a request for the maintenance technician to add technologies affected by maintenance event.

15. The method of claim 10, wherein the maintenance event affects a plurality of different network elements such that alarms are suppressed across the different network elements during the maintenance interval.
